# EUROPEAN PATENT SPECIFICATION

(11) **EP 4 565 832 B1**
(45) Date of publication and mention of the grant of the patent: **07.10.2026**
(21) Application number: 23748124.7
(22) Date of filing: 14.07.2023
(51) Int. Cl.: F28D 9/00, F28D 21/00, F28F 9/02

(54) **LIQUID-COOLED CONDENSER**
FLÜSSIGKEITSGEKÜHLTER KONDENSATOR
CONDENSATEUR REFROIDI PAR LIQUIDE

(30) Priority: 05.08.2022 IT 202200016788
(43) Date of publication of application: 11.06.2025
(73) Proprietor: UFI Innovation Center S.r.l., 38061 Ala (TN) (IT)
(72) Inventor: GIRONDI, Giorgio, 38061 Ala, Trento (IT)
(74) Representative: Gamba, Alessandro
(86) International application number: PCT/IB2023/057213
(87) International publication number: WO 2024/028676

(56) References cited:
- WO-A1-2015/042721
- WO-A1-2020/238781
- CN-A- 106 918 165
- CN-U- 205 940 233
- US-A1- 2012 234 523

## Description

### Field of application

The present invention relates to a liquid-cooled condenser.

In particular, the present invention belongs to the automotive field.

### Background art

Liquid-based condenser solutions are known from the prior art, which in fact find specific application in a vehicle, in particular in the cooling system of a vehicle.

Further in detail, the liquid-cooled condenser is suitable for carrying out a heat exchange operation between two fluids, that is between a refrigerant and a coolant liquid. In fact, the liquid-cooled condenser is used to carry out an action of condensing of a refrigerant fluid which is at least partially in a gas state due to the heat exchange with a fluid to be cooled, for example due to the heat exchange which occurs in appropriate evaporators between said refrigerant fluid and the coolant fluid of the batteries of electric or hybrid vehicles. As a result of the heat exchange which takes place in the liquid-cooled condenser, the refrigerant fluid condenses, giving up heat to the coolant liquid. For simplicity, in the following paragraphs, the term "liquid" refers to said coolant liquid.

In particular, "refrigerant fluid" means a fluid having a chemical composition which allows it to undergo a phase change at temperature and pressure values compatible with the operation of the cooling system.

In the automotive field, it is known the use of liquid-based condensers as intersection elements between a system in which the refrigerant fluid circulates and a system in which the liquid circulates.

Obtaining a liquid-cooled condenser, suitable for carrying out an efficient heat exchange between the refrigerant fluid and the liquid, is desired in the sector. In fact, a liquid-cooled condenser suitable for carrying out an efficient heat exchange improves both the efficiency of the system in which the refrigerant fluid circulates and the efficiency of the system in which the liquid circulates. Examples of known liquid-cooled condenser having these types of drawbacks are known in documents CN205940233U, which discloses a liquid-cooled condenser according to the preamble of claim 1, CN106918165B, WO2020238781A1, WO2015042721A1 and US2012234523A1.

### Solution of the invention

The need is therefore strongly felt to provide a liquid-cooled condenser which fulfills said need.

Object of the present invention is to provide a liquid-cooled condenser having a duct layout that improves the heat exchange and in particular the condensation of the refrigerant fluid.

Such an object is achieved by a liquid-cooled condenser as claimed in claim 1. The dependent claims thereon show preferred variants resulting in further advantageous aspects.

### Description of the drawings

Further features and advantages of the invention will become apparent from the description provided below of preferred exemplary embodiments thereof, given by way of non-limiting indication, with reference to the accompanying drawings, in which:

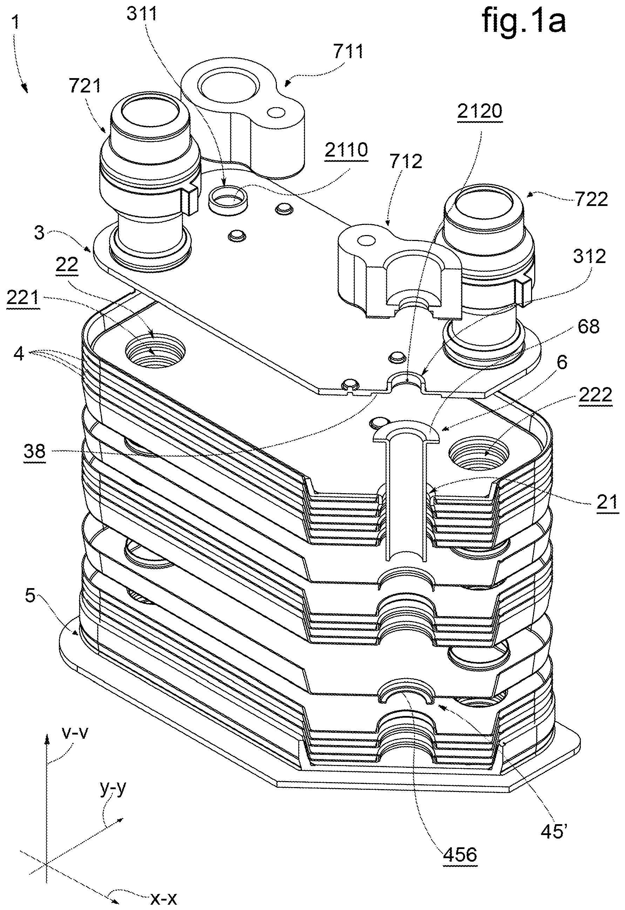

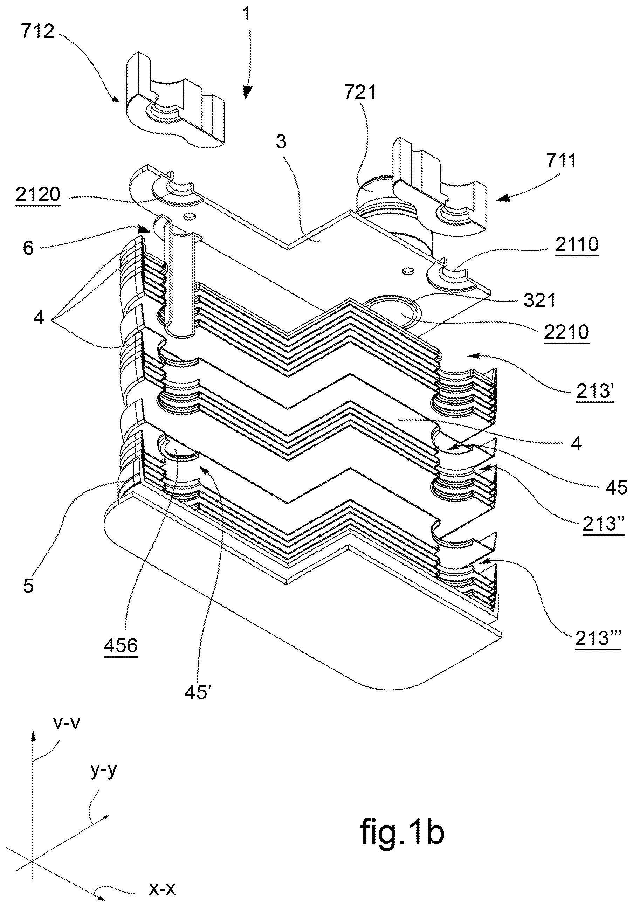

- Figures 1a and 1b show two partially sectioned perspective views in separate parts of the liquid-cooled condenser according to the present invention, according to a preferred embodiment;

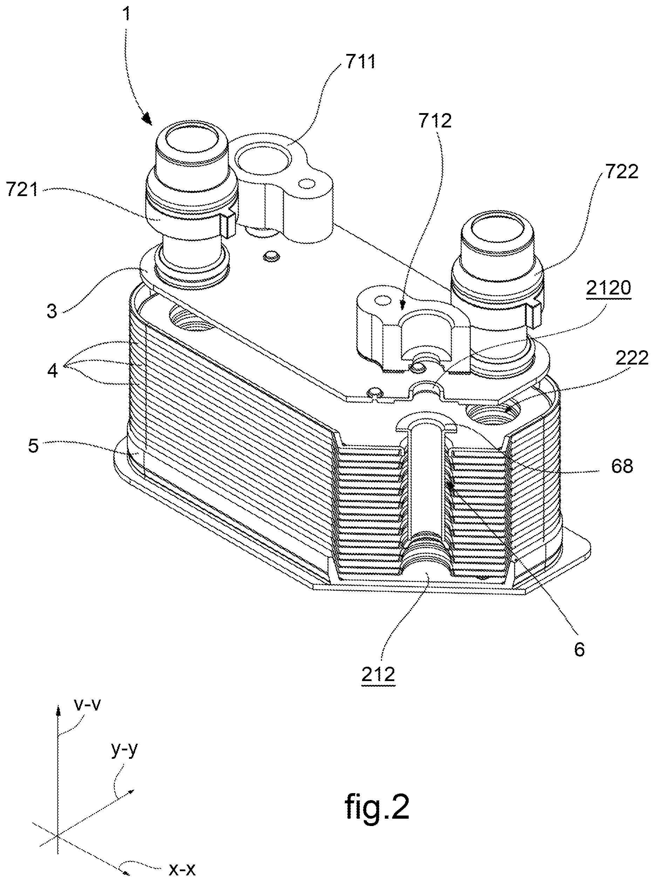

- Figure 2 shows a partially sectioned perspective view in semi-separated parts of the liquid-cooled condenser in Figures 1a and 1b;

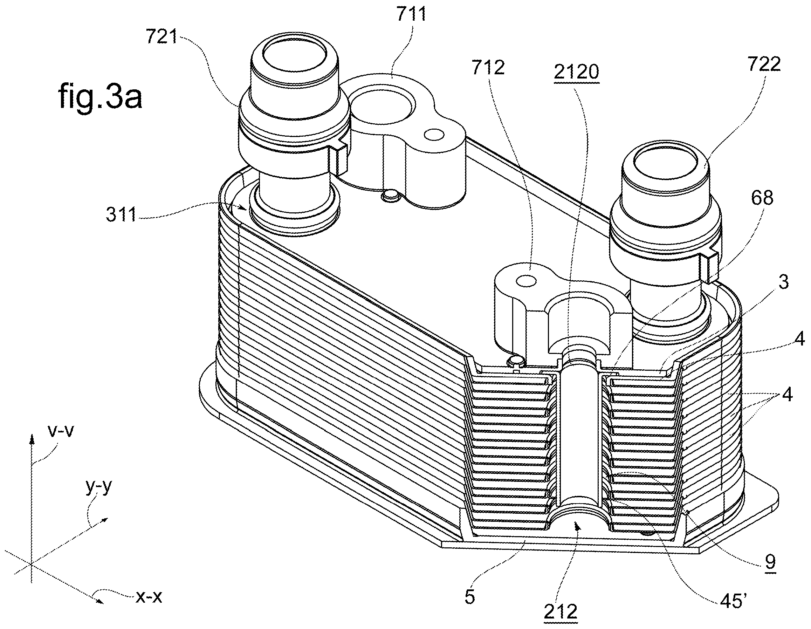

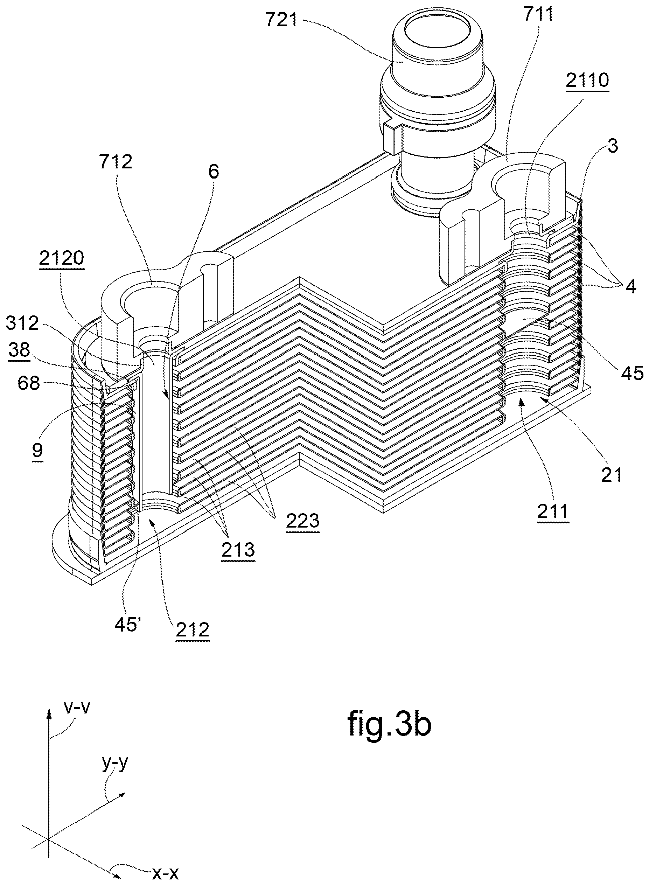

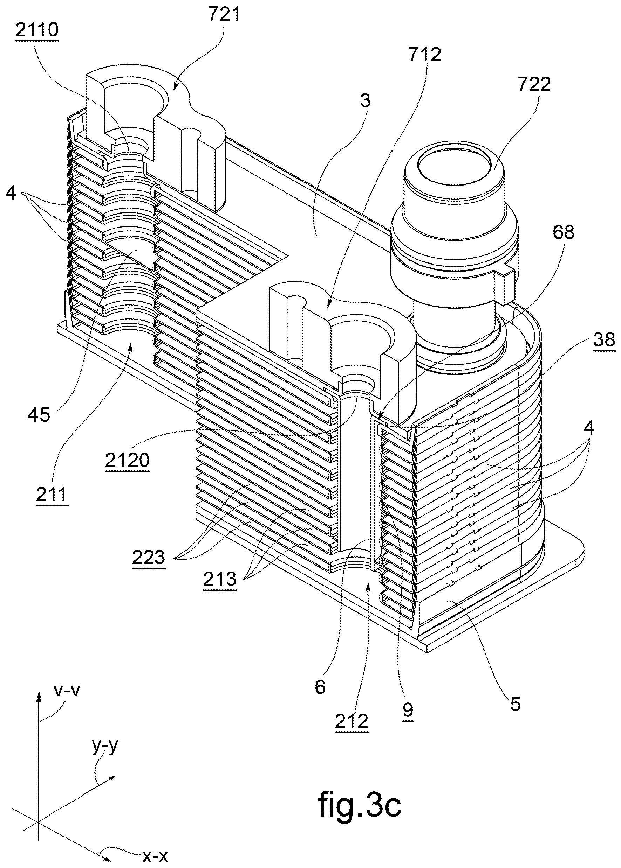

- Figures 3a 3b and 3c show, in perspective, the liquid-cooled condenser in Figures 1a and 1b, sectioned according to different section planes.

### Detailed description

With reference to the accompanying Figures, reference number 1 indicates a liquid-cooled condenser 1 of a cooling system of a vehicle, according to the present invention.

The liquid-cooled condenser 1 is suitable for carrying out an action of condensing of a refrigerant fluid circulating in the cooling system by means of heat exchange with a liquid.

In fact, both a refrigerant fluid and a liquid flow in the liquid-cooled condenser 1.

The refrigerant fluid, in the liquid-cooled condenser, undergoes a phase transformation being subjected to condensation.

By way of example, refrigerant fluid means one of the operating fluids normally used in a refrigeration cycle such as, for example, R134a, R744, R290, R718, R717, R1234yfa or R1234yf. According to a preferred embodiment, the refrigerant fluid is of the R1234yf type.

Preferably, the refrigerant fluid reaches the liquid-cooled condenser in an at least partially gas state.

According to a preferred embodiment, the refrigerant fluid reaches the liquid-cooled condenser 1 after having flowed into a compressor and, even earlier into an evaporator.

Preferably, the refrigerant fluid reaches the liquid-cooled condenser in a totally gas state.

According to a preferred embodiment, the liquid is a water and glycol-based solution.

According to the present invention, the liquid-cooled condenser 1 comprises a refrigerant inlet mouth 2110 and a refrigerant outlet mouth 2120 through which the refrigerant fluid flows in and out.

Furthermore, according to the present invention, the liquid-cooled condenser 1 comprises a liquid inlet mouth 2210 and a liquid outlet mouth 2220 through which the liquid flows in and out.

The liquid-cooled condenser 1 comprises plate-like end elements 3, 5 and intermediate plate-like elements 4.

The liquid-cooled condenser 1 is obtained by joining said plate-like elements. In particular, the plate-like elements are packed together along a preferential stacking direction.

In particular, the liquid-cooled condenser 1 extends in height with respect to a first axis V-V and transversely with respect to two transverse axes X-X, Y-Y, lying on the same imaginary plane, orthogonal to the axis V-V.

Preferably, the plate-like elements extend substantially in parallel to said first axis V-V. That is, the plate-like elements extend transversely with respect to the two transverse axes X-X, Y-Y.

Preferably, the plate-like end elements 3, 5 are axially spaced apart along the first axis V-V. According to a preferred embodiment, a plate-like end element 3 is referred to as upper, while the other plate-like end element 5 is referred to as lower.

According to the present invention, the mouths 2110, 2120, 2210, 2220 are obtained on said plate-like end elements 3, 5.

According to the present invention, the refrigerant inlet mouth 2110, the outlet refrigerant mouth 2120, the liquid inlet mouth 2210 and the liquid outlet mouth 2220 are obtained on said plate-like end elements 3, 5.

Preferably, all the mouths 2110, 2120, 2210, 2220 are obtained on the upper plate-like element 3.

Preferably, the refrigerant inlet mouth 2110, the outlet refrigerant mouth 2120, the liquid inlet mouth 2210 and the liquid outlet mouth 2220 are obtained on said upper plate-like end element 3.

According to the present invention, the intermediate plate-like elements 4 are specially shaped, delimiting, in the mutual stacking thereof, a refrigerant region 21 in which the refrigerant fluid flows and a liquid region 22 in which the liquid flows.

Preferably, the intermediate plate-like elements 4 are obtained by means of mechanical molding, cutting and/or folding operations carried out from a sheet.

Preferably, the intermediate plate-like elements 4 are made of aluminum alloy.

The refrigerant region 21 comprises refrigerant supply sections 211, 212, inlet and outlet sections, respectively, in fluidic communication with the refrigerant inlet mouth 2110 and with the refrigerant outlet mouth 2120, and transverse refrigerant sections 213.

Preferably, the refrigerant supply sections 211, 212 are aligned along the axis V-V at the refrigerant inlet mouth 2110 and the refrigerant outlet mouth 2120, respectively. Preferably, the inlet refrigerant supply section 211 and the outlet refrigerant supply section 212 are aligned along the axis V-V at the refrigerant inlet mouth 2110 and the refrigerant outlet mouth 2120.

Preferably, said transverse refrigerant sections 213 extend mutually parallel to each other.

The liquid region 22 comprises liquid supply sections 221, 222, inlet and outlet sections, respectively, in fluidic communication with the liquid inlet mouth 2210 and with the liquid outlet mouth 2220, and transverse liquid sections 223.

Preferably, the liquid supply sections 221, 222 are aligned along the axis V-V at the liquid inlet mouth 2210 and the liquid outlet mouth 2220, respectively. Preferably, the inlet liquid supply section 221 and the outlet liquid supply section 222 are aligned along the axis V-V at the liquid inlet mouth 2210 and the liquid outlet mouth 2220.

Preferably, said transverse liquid sections 223 extend mutually parallel to each other.

The transverse liquid sections 223 are positioned alternately with the transverse refrigerant sections 213.

According to a preferred embodiment, the transverse refrigerant sections 213 comprise respective turbulator elements.

According to a preferred embodiment, the transverse liquid sections 223 comprise respective turbulator elements.

Preferably, both the transverse refrigerant sections 213 and the transverse liquid sections 223 comprise respective turbulator elements.

According to a preferred embodiment, the transverse refrigerant sections 213 have a greater height than the transverse liquid sections 223.

According to a preferred embodiment, the transverse refrigerant sections 213 have a greater height than the transverse liquid sections 223 by 20%.

According to a preferred embodiment, the transverse refrigerant sections 213 have a height from 2.2 millimeters to 2.6 millimeters, preferably equal to about 2.4 millimeters.

According to a preferred embodiment, the transverse liquid sections 223 have a height from 1.8 millimeters to 2.2 millimeters, preferably equal to about 2.0 millimeters.

According to a preferred embodiment, the intermediate plate-like elements 4 are shaped to present specific openings, the alignment of which along the axis V-V defines the aforementioned supply sections.

According to a preferred embodiment, at least one of the intermediate plate-like elements 4 comprises a plug portion 45 positioned transversely to an inlet refrigerant supply section 211 to divert the flow of the refrigerant fluid, preferably in a transverse direction with respect to the axis V-V.

Preferably, at least one of the intermediate plate-like elements 4 comprises a plug portion 45' positioned transversely to an outlet refrigerant supply section 212 so that, in the transverse refrigerant sections 213, an inlet refrigerant region 213', an intermediate refrigerant region 213'', and an outlet refrigerant region 213‴ are identified.

Preferably, the inlet refrigerant region 213', the intermediate refrigerant region 213" and the outlet refrigerant region 213‴ each comprise at least three transverse refrigerant sections 213.

Preferably, the inlet refrigerant region 213', the intermediate refrigerant region 213" and the outlet refrigerant region 213‴ each comprise the same number of transverse refrigerant sections 213.

Preferably, the inlet refrigerant region 213' comprises a greater number of transverse refrigerant sections 213 with respect to the intermediate refrigerant region 213" and the outlet refrigerant region 213‴.

According to a preferred embodiment, the refrigerant fluid flows into the refrigerant region 21 so as to have flows in opposite transverse directions between respective operating regions 213', 213", 213‴.

According to a preferred embodiment, the refrigerant fluid flows into the refrigerant region 21 so as to have flows in opposite transverse respectively between the inlet refrigerant region 213' and the intermediate refrigerant region 213" and between the intermediate refrigerant region 213" outlet refrigerant region 213‴.

According to a preferred embodiment, the flow of the refrigerant fluid in the inlet refrigerant region 213' and in the outlet refrigerant region 213‴ have the same transverse direction with respect to the intermediate refrigerant region 213".

Furthermore, according to the present invention, the liquid-cooled condenser 1 comprises a tubular element 6 which extends into the outlet refrigerant supply section 212, defining a fluidic duct therein.

Furthermore, according to the present invention, the transverse section of the tubular element 6 is lower than the cross section of the outlet refrigerant supply section 212, identifying a condensation gap 9.

Preferably, said condensation gap 9 is an annular duct.

Preferably, said annular duct, in section, has the shape of a circular crown.

Preferably, the cross section of the tubular element 6 is lower than the internal diameter of the refrigerant outlet mouth 2120.

According to a preferred embodiment, the refrigerant fluid inside the tubular element 6 flows in a liquid state towards the refrigerant outlet mouth 2120, while the refrigerant fluid inside the condensation gap 9 flows in the opposite direction, being at least partially in a gas state.

According to a preferred embodiment, the tubular element 6 comprises a radial collar 68.

According to a preferred embodiment, the radial collar 68 extends further than the section of the outlet refrigerant supply section 212.

Preferably, the radial collar 68 has a greater external diameter than the internal diameter of the outlet refrigerant supply section 212. According to a preferred embodiment, said radial collar 68 is positioned between a plate-like end element 3, 5 and an intermediate plate-like element 4.

Preferably, the radial collar 68 has a greater external diameter than the internal diameter of the refrigerant outlet mouth 2120.

According to a preferred embodiment, the plate-like end element 3, 5 comprises a recess 38 in which the radial collar 68 is housed.

Preferably, the recess 38 is in the upper plate-like end element 3. Preferably, the recess 38 is in the upper plate-like end element 3 on the face facing the adjacent intermediate plate-like element 4.

According to a preferred embodiment, a plate-like end element 3, 5 comprises two or more plates and the radial collar 68 is positioned between two plates comprised in said plate-like end element.

Preferably, the radial collar 68 has an external diameter greater than the internal diameter of the refrigerant outlet mouth 2120.

According to a preferred embodiment, one of the plates comprised in the plate-like end element 3, 5 comprises a recess 38 in which is housed the radial collar 68.

According to a preferred embodiment, the recess 38 is shaped to house and align along the axis V-V, the tubular element 6 in the outlet refrigerant supply section 212.

According to a preferred embodiment, the plug portion 45', housed in the outlet refrigerant supply section 212, comprises a tubular element opening 456 through which the tubular element 6 extends.

According to a preferred embodiment, the tubular element 6 engages the plug portion 45'.

According to a preferred embodiment, the tubular element 6 is operatively connected to the plug portion 45', preferably to said tubular element opening 456, to fluidically connect the outlet refrigerant region 213‴ to the refrigerant outlet mouth 2120.

According to a preferred embodiment, the tubular element 6 engages the edge of the tubular element opening 456 comprised in the plug portion 45'.

Preferably, said tubular element 6 is operatively connected to the plug portion 45' by means of a brazing joint.

According to a preferred embodiment, the plug portion 45' has an annular shape housing in the condensation gap 9.

According to a preferred embodiment, the inside of the tubular element 6 fluidically connects the outlet refrigerant region 213‴ to the refrigerant outlet mouth 2120.

According to a preferred embodiment, the tubular element 6 extends along the axis V-V beyond the plug portion 45' into the outlet refrigerant supply section 212 in fluidic communication with the outlet refrigerant region 213‴.

According to a preferred embodiment, the plug portion 45, 45' is comprised, in one piece, in the respective intermediate plate-like element 4.

Preferably, an intermediate plate-like element 4 comprises the plug portion 45 suitable for closing the inlet refrigerant supply section 211.

Preferably, an intermediate plate-like element 4 comprises the plug portion 45' suitable for closing the outlet refrigerant supply section 212, that is, it is suitable for delimiting the condensation gap 9.

In other words, at least one, preferably two, intermediate plate-like element 4 are shaped comprising the plug portion 45.

According to a preferred embodiment, the plate-like end elements 3, 5, the intermediate plate-like elements 4, and the tubular element 6 are mutually joined to each other by means of a brazing operation, preferably in a vacuum furnace.

According to a preferred embodiment, the liquid-cooled condenser 1 comprises inlet and outlet refrigerant connection members 711, 712, operatively connected to the plate-like end element 3, 5 at the refrigerant inlet mouth 2110 and at the refrigerant outlet mouth 2120.

According to a preferred embodiment, the liquid-cooled condenser 1 comprises inlet and outlet liquid connection members 721, 722, operatively connected to the plate-like end element 3, 5 at the liquid inlet mouth 2210 and at the liquid outlet mouth 2220.

According to a preferred embodiment, the connection members 711, 712, 721, 722, the plate-like end elements 3, 5, the intermediate plate-like elements 4, and the tubular element 6 are mutually joined to each other by means of a single brazing operation, preferably in a vacuum furnace.

According to a preferred embodiment, the plate-like end element 3, 5, comprises a protruding connection collar 312, positioned around the refrigerant outlet mouth 2120, which is engageable by the outlet refrigerant connection member 712.

According to a preferred embodiment, the plate-like end element 3, 5 comprises, about the refrigerant inlet mouth 2110 and the refrigerant outlet mouth 2120, a respective connection collar 311, 312, vertically protruding and engageable by a respective refrigerant connection member 711, 712.

According to a preferred embodiment, each collar facilitates the positioning of the respective connection member during the assembly of the liquid-cooled condenser 1.

According to a preferred embodiment, the liquid-cooled condenser 1 is placeable, in the vehicle and, in place, in a vertical configuration, that is, in a position in which said axis V-V and therefore the axis of the tubular element 6 are oriented in a substantially horizontal direction with respect to the ground plane.

According to a preferred embodiment, the liquid-cooled condenser 1 is placeable, in the vehicle and in place, in a position in which said axis V-V and therefore the axis of the tubular element 6 are parallel to a ground plane, or to the road on which the vehicle is moving.

Furthermore, according to a preferred embodiment, the liquid-cooled condenser 1 installed in a vertical position has the tubular element 6 in a lower geodetic position with respect to the inlet refrigerant supply section 211.

Innovatively, the liquid-cooled condenser largely fulfills the purpose of the present invention, overcoming issues which are typical of the prior art.

Advantageously, in fact, the liquid-cooled condenser has fluid passages suitable for making the heat exchange particularly efficient.

Advantageously, the path of the refrigerant fluid is optimized as best as possible, to favor the condensation of the refrigerant fluid.

Advantageously, the fluid path of the refrigerant fluid is optimized to better manage the phase transition thereof.

Advantageously, the tubular element comprises a radial collar being housable in a special recess provided at the interface between the plate-like end element and the intermediate plate-like element. Advantageously, the radial collar facilitates the integration of the tubular element into the condenser and provides a centering system which is useful to ensure the correct positioning of the tubular element inside the outlet refrigerant supply section and an adequate control over the annular extension of the condensation gap.

Advantageously, the tubular element comprises an end portion which protrudes with respect to the tubular element opening comprised in the plug portion suitable for closing the outlet refrigerant supply section. Advantageously, said portion interacts with the radial collar to facilitate the positioning and centering of the tubular element inside the outlet refrigerant supply section, simplifying the integration of the tubular element into the condenser and the related production process.

Advantageously, the tubular element comprises an end portion which protrudes with respect to the tubular element opening comprised in the plug portion suitable for closing the outlet refrigerant supply section. Advantageously, this configuration allows for obtaining a stable brazing joint between the plug portion and the outer surface of the tubular element, ensuring a stable and reliable integration of the tubular element itself in the condenser and the maintenance of the airtight separation between the condensation gap and the outlet refrigerant supply section required to ensure the correct operation of the condenser.

Advantageously, the tubular element comprises an end portion extending into the outlet refrigerant supply section. Said portion allows for distributing the refrigerant flow rate on the transverse sections of the outlet refrigerant region, maximizing the exploitation of the surface available for the heat exchange with the liquid.

Advantageously, the condenser is installable in a vertical position with the outlet refrigerant supply section positioned in a lower geodetic position with respect to the inlet refrigerant supply section and with the tubular element oriented in a substantially horizontal position with respect to the ground plane. Advantageously, in this embodiment, the integration of the tubular element in the outlet refrigerant supply section allows for maximizing the amount of liquid refrigerant exiting the condenser maintaining possible portions of refrigerant still in the gas phase in the upper part of the transverse sections.

Advantageously, the installation of the condenser in a vertical position and of the tubular element with the main axis oriented horizontally in a lower geodetic position with respect to to the inlet refrigerant supply section also allows for exploiting the gravity in the circulation of the refrigerant fluid inside the condenser, in particular, in the case of a possible stratification of the vapor phase and the liquid phase in the transverse refrigerant sections comprised in the condenser, and ensures an adequate circulation of the refrigerant fluid in the liquid phase towards the outlet mouth and ensures the control of the temperature of the components included in the cooling system.

Advantageously, any pressure drops introduced into the refrigerant circuit by the presence of the tubular element are compensated for by transverse refrigerant sections of greater height than the transverse liquid sections.

Advantageously, the liquid-cooled condenser is a single component.

It is apparent that, in order to meet contingent needs, a skilled person in the art may make changes to the above-described liquid-cooled condenser, all contained within the scope of protection as defined by the following claims.

### List of reference numbers:

1 liquid-cooled condenser
21 refrigerant region
211 inlet refrigerant supply section
212 outlet refrigerant supply section
213 transverse refrigerant sections
213' inlet refrigerant region
213" intermediate refrigerant region
213‴ outlet refrigerant region
2110 refrigerant inlet mouth
2120 refrigerant outlet mouth
22 liquid region
221 inlet liquid supply section 222 outlet liquid supply section 223 transverse liquid sections 2210 liquid inlet mouth
2220 liquid outlet mouth
3 upper plate-like end element
311, 312, 321, 322 vertical connection collar
38 recess
4 intermediate plate-like element
45, 45' plug portion
456 tubular element opening
5 lower plate-like end element
6 tubular element
68 radial collar
711 inlet refrigerant connection member
712 outlet refrigerant connection member
9 condensation gap
X-X, Y-Y transverse axes
V-V first axis

## Claims

1. A liquid-cooled condenser (1), of a vehicle cooling system, adapted to carry out a condensation of a refrigerant fluid circulating in the cooling system by heat exchange with a liquid, comprising a refrigerant inlet mouth (2110) and a refrigerant outlet mouth (2120) through which the refrigerant fluid flows in and out, and a liquid inlet mouth (2210) and a liquid outlet mouth (2220) through which the liquid flows in and out, wherein the liquid-cooled condenser (1) comprises:
- upper and lower plate-like end elements (3, 5), wherein said mouths (2110, 2120, 2210, 2220) are obtained on said plate-like end elements (3, 5), preferably they are all obtained on the upper plate-like element (3);
- a plurality of intermediate plate-like elements (4) arranged between the plate-like end elements (3, 5); wherein the intermediate plate-like elements (4) are specially shaped, delimiting, in their mutual stacking, a refrigerant region (21), in which the refrigerant fluid flows, comprising refrigerant supply sections (211, 212), inlet and outlet sections, respectively, in fluid communication with the refrigerant inlet mouth (2110) and with the refrigerant outlet mouth (2120), and transverse refrigerant sections (213), and a liquid region (22), into which the liquid flows, comprising liquid supply sections (221, 222), inlet and outlet sections, respectively, in fluid communication with the liquid inlet mouth (2210) and the liquid outlet mouth (2220), and transverse liquid sections (223) positioned alternating with the transverse refrigerant sections ( 213);
wherein the liquid-cooled condenser (1) comprises a tubular element (6) extending into the outlet refrigerant supply section (212), wherein the transverse section of the tubular element (6) is smaller than the transverse section of the outlet refrigerant supply section (212), identifying a condensation gap (9);
wherein the liquid-cooled condenser (1) is **characterized in that** the tubular element (6) comprises a radial collar (68), wherein said radial collar (68) is positioned between a plate-like end element (3, 5) and an intermediate plate-like element (4).

2. A liquid-cooled condenser (1) according to claim 1, wherein the tubular element (6) extends along an axis (V-V), and the liquid-cooled condenser (1) is positionable in a position in which the tubular element (6) and the axis (V-V) are parallel to a ground plane and in which, preferably, the tubular element (6) is in a lower geodetic position as compared to the inlet refrigerant supply section (211).

3. A liquid-cooled condenser (1) according to any one of the preceding claims, wherein the refrigerant fluid inside the tubular element (6) flows in a liquid state towards the refrigerant outlet mouth (2120), while the refrigerant fluid inside the condensation gap (9) flows in the opposite direction, being at least partially in a gas state.

4. A liquid-cooled condenser (1) according to any one of the preceding claims, wherein the plate-like end element (3, 5) comprises a recess (38) in which the radial collar (68) is accommodated.

5. A liquid-cooled condenser (1) according to any one of the preceding claims, wherein at least one of the intermediate plate-like elements (4) comprises a plug portion (45) positioned transversely to an inlet refrigerant supply section (211) to divert the flow of the refrigerant fluid.

6. A liquid-cooled condenser (1) according to claim 5, wherein at least one of the intermediate plate-like elements (4) comprises a plug portion (45') positioned transversely to an outlet refrigerant supply section (212) so that, in the transverse refrigerant sections (213), an inlet refrigerant region (213'), an intermediate refrigerant region (213"), and an outlet refrigerant region (213‴) are identified.

7. A liquid-cooled condenser (1) according to claim 6, wherein the refrigerant fluid flows into the refrigerant region (21) so as to have flows in opposite transverse directions between respective operating regions (213', 213", 213‴).

8. A liquid-cooled condenser (1) according to any one of claims 6 to 7, wherein the plug portion (45') accommodated in the outlet refrigerant supply section (212) comprises a tubular element opening (456) through which the tubular element (6) extends, wherein said plug portion (45') has an annular shape when accommodated in the condensation gap (9).

9. A liquid-cooled condenser (1) according to any one of claims 6 to 8, wherein the tubular element (6) extends along an axis (V-V) beyond the plug portion (45') into the outlet refrigerant supply section (212) in fluid communication with the outlet refrigerant region (213‴).

10. A liquid-cooled condenser (1) according to any one of claims 5 to 9, wherein said plug portion (45, 45') is embedded, in one piece, in the respective intermediate plate-like element (4).

11. A liquid-cooled condenser (1) according to any one of the preceding claims, wherein the transverse refrigerant sections (213) and/or the transverse liquid sections (223) comprise respective turbolator elements.

12. A liquid-cooled condenser (1) according to any one of the preceding claims, wherein the transverse refrigerant sections (213) have a greater height than the transverse liquid sections (223).

13. A liquid-cooled condenser (1) according to any one of the preceding claims, wherein the plate-like end elements (3, 5), the intermediate plate-like elements (4), and the tubular element (6) are mutually joined by a brazing operation, preferably in a vacuum furnace.

14. A liquid-cooled condenser (1) according to any one of the preceding claims, comprising inlet and outlet refrigerant connection members (711, 712), and inlet and outlet liquid connection members (721, 722), operatively connected to the plate-like end element (3, 5) at the refrigerant inlet mouth (2110), the refrigerant outlet mouth (2120), the liquid inlet mouth (2210), and the liquid outlet mouth (2220), wherein said connection members (711, 712, 721, 722), said plate-like end elements (3, 5), said intermediate plate-like elements (4), and said tubular element (6) are mutually joined by a single brazing operation, preferably in a vacuum furnace.

15. A liquid-cooled condenser (1) according to claim 14, wherein the plate-like end element (3, 5), preferably the upper plate-like end element (3), comprises a protruding connection collar (312), positioned around the refrigerant outlet mouth (2120), which is engageable by the outlet refrigerant connection member (712).

16. A liquid-cooled condenser (1) according to claim 14 or claim 15, wherein the plate-like end element (3, 5) comprises, around the refrigerant inlet mouth and the refrigerant outlet mouth (2110, 2120), a respective protruding connection collar (311, 312), which is engageable by a respective connection member (711, 712).

## Patentansprüche

1. Flüssigkeitsgekühlter Kondensator (1) eines Fahrzeugkühlsystems, der dazu ausgelegt ist, eine Verflüssigung eines in dem Kühlsystem zirkulierenden Kältemittels durch Wärmetausch mit einer Flüssigkeit durchzuführen, umfassend eine Kältemitteleinlassmündung (2110) und eine Kältemittelauslassmündung (2120), durch welche das Kältemittel ein- und ausströmt, und eine Flüssigkeitseinlassmündung (2210) und eine Flüssigkeitsauslassmündung (2220), durch welche die Flüssigkeit ein- und ausströmt, wobei der flüssigkeitsgekühlte Kondensator (1) umfasst:
- obere und untere plattenartige Endelemente (3, 5), wobei die Mündungen (2110, 2120, 2210, 2220) an den plattenartigen Endelementen (3, 5) ausgebildet sind, vorzugsweise sind sie alle an dem oberen plattenartigen Element (3) ausgebildet;
- eine Vielzahl von zwischen den plattenartigen Endelementen (3, 5) angeordneten plattenartigen Zwischenelementen (4); wobei die plattenartigen Zwischenelemente (4) speziell geformt sind und bei ihrer gegenseitigen Stapelung einen Kältemittelbereich (21), in dem das Kältemittel strömt, der Kältemittelzufuhrabschnitte (211, 212), jeweils Einlass- und Auslassabschnitte, die in Fluidverbindung mit der Kältemitteleinlassmündung (2110) und mit der Kältemittelauslassmündung (2120) stehen, und Kältemittelquerabschnitte (213) umfasst, und einen Flüssigkeitsbereich (22), in den die Flüssigkeit strömt, der Flüssigkeitszufuhrabschnitte (221, 222), jeweils Einlass- und Auslassabschnitte, die in Fluidverbindung mit der Flüssigkeitseinlassmündung (2210) und der Flüssigkeitsauslassmündung (2220) stehen, und Flüssigkeitsquerabschnitte (223), die abwechselnd mit den Kältemittelquerabschnitten (213) angeordnet sind, begrenzen; wobei der flüssigkeitsgekühlte Kondensator (1) ein rohrförmiges Element (6) umfasst, das sich in den Auslass-Kältemittelzufuhrabschnitt (212) erstreckt, wobei der Querschnitt des rohrförmigen Elements (6) kleiner ist als der Querschnitt des Auslass-Kältemittelzufuhrabschnitts (212), wodurch ein Kondensationsspalt (9) identifiziert wird;
wobei der flüssigkeitsgekühlte Kondensator (1) **dadurch gekennzeichnet ist, dass** das rohrförmige Element (6) einen radialen Bund (68) umfasst, wobei der radiale Bund (68) zwischen einem plattenartigen Endelement (3, 5) und einem plattenartigen Zwischenelement (4) positioniert ist.

2. Flüssigkeitsgekühlter Kondensator (1) nach Anspruch 1, wobei sich das rohrförmige Element (6) entlang einer Achse (V-V) erstreckt und der flüssigkeitsgekühlte Kondensator (1) in einer Position positionierbar ist, in der das rohrförmige Element (6) und die Achse (V-V) parallel zu einer Bodenebene verlaufen und in der sich das rohrförmige Element (6) vorzugsweise in einer niedrigeren geodätischen Position im Vergleich zum Einlass-Kältemittelzufuhrabschnitt (211) befindet.

3. Flüssigkeitsgekühlter Kondensator (1) nach einem der vorhergehenden Ansprüche, wobei das Kältemittel innerhalb des rohrförmigen Elements (6) in einem flüssigen Zustand in Richtung der Kältemittelauslassmündung (2120) strömt, während das Kältemittel innerhalb des Kondensationsspalts (9) in der entgegengesetzten Richtung strömt und sich dabei zumindest teilweise in einem gasförmigen Zustand befindet.

4. Flüssigkeitsgekühlter Kondensator (1) nach einem der vorhergehenden Ansprüche, wobei das plattenartige Endelement (3, 5) eine Aussparung (38) umfasst, in welcher der radiale Bund (68) aufgenommen ist.

5. Flüssigkeitsgekühlter Kondensator (1) nach einem der vorhergehenden Ansprüche, wobei mindestens eines der plattenartigen Zwischenelemente (4) einen Stopfenabschnitt (45) umfasst, der quer zu einem Einlass-Kältemittelzufuhrabschnitt (211) positioniert ist, um die Strömung des Kältemittels umzuleiten.

6. Flüssigkeitsgekühlter Kondensator (1) nach Anspruch 5, wobei mindestens eines der plattenartigen Zwischenelemente (4) einen Stopfenabschnitt (45') umfasst, der quer zu einem Auslass-Kältemittelzufuhrabschnitt (212) positioniert ist, sodass in den Kältemittelquerabschnitten (213) ein Einlass-Kältemittelbereich (213'), ein Zwischen-Kältemittelbereich (213") und ein Auslass-Kältemittelbereich (213‴) identifiziert werden.

7. Flüssigkeitsgekühlter Kondensator (1) nach Anspruch 6, wobei das Kältemittel in den Kältemittelbereich (21) so einströmt, dass es Strömungen in entgegengesetzten Querrichtungen zwischen jeweiligen Betriebsbereichen (213', 213", 213‴) aufweist.

8. Flüssigkeitsgekühlter Kondensator (1) nach einem der Ansprüche 6 bis 7, wobei der in dem Auslass-Kältemittelzufuhrabschnitt (212) aufgenommene Stopfenabschnitt (45') eine Öffnung für das rohrförmige Element (456) umfasst, durch die sich das rohrförmige Element (6) erstreckt, wobei der Stopfenabschnitt (45') eine Ringform aufweist, wenn er in dem Kondensationsspalt (9) aufgenommen ist.

9. Flüssigkeitsgekühlter Kondensator (1) nach einem der Ansprüche 6 bis 8, wobei sich das rohrförmige Element (6) entlang einer Achse (V-V) über den Stopfenabschnitt (45') hinaus in den Auslass-Kältemittelzufuhrabschnitt (212) erstreckt, der in Fluidverbindung mit dem Auslass-Kältemittelbereich (213‴) steht.

10. Flüssigkeitsgekühlter Kondensator (1) nach einem der Ansprüche 5 bis 9, wobei der Stopfenabschnitt (45, 45') einstückig in das jeweilige plattenartige Zwischenelement (4) eingebettet ist.

11. Flüssigkeitsgekühlter Kondensator (1) nach einem der vorhergehenden Ansprüche, wobei die Kältemittelquerabschnitte (213) und/oder die Flüssigkeitsquerabschnitte (223) jeweilige Turbulator elemente umfassen.

12. Flüssigkeitsgekühlter Kondensator (1) nach einem der vorhergehenden Ansprüche, wobei die Kältemittelquerabschnitte (213) eine größere Höhe aufweisen als die Flüssigkeitsquerabschnitte (223).

13. Flüssigkeitsgekühlter Kondensator (1) nach einem der vorhergehenden Ansprüche, wobei die plattenartigen Endelemente (3, 5), die plattenartigen Zwischenelemente (4) und das rohrförmige Element (6) durch einen Lötvorgang, vorzugsweise in einem Vakuumofen, miteinander verbunden sind.

14. Flüssigkeitsgekühlter Kondensator (1) nach einem der vorhergehenden Ansprüche, umfassend Einlass- und Auslass-Kältemittelanschlussglieder (711, 712) und Einlass- und Auslass-Flüssigkeitsanschlussglieder (721, 722), die an der Kältemitteleinlassmündung (2110), der Kältemittelauslassmündung (2120), der Flüssigkeitseinlassmündung (2210) und der Flüssigkeitsauslassmündung (2220) funktional mit dem plattenartigen Endelement (3, 5) verbunden sind, wobei die Anschlussglieder (711, 712, 721, 722), die plattenartigen Endelemente (3, 5), die plattenartigen Zwischenelemente (4) und das rohrförmige Element (6) durch einen einzigen Lötvorgang, vorzugsweise in einem Vakuumofen, miteinander verbunden sind.

15. Flüssigkeitsgekühlter Kondensator (1) nach Anspruch 14, wobei das plattenartige Endelement (3, 5), vorzugsweise das obere plattenartige Endelement (3), einen vorstehenden Anschlussbund (312) umfasst, der um die Kältemittelauslassmündung (2120) herum angeordnet ist und mit dem das Auslass-Kältemittelanschlussglied (712) in Eingriff bringbar ist.

16. Flüssigkeitsgekühlter Kondensator (1) nach Anspruch 14 oder Anspruch 15, wobei das plattenartige Endelement (3, 5) um die Kältemitteleinlassmündung und die Kältemittelauslassmündung (2110, 2120) herum einen jeweils vorstehenden Anschlussbund (311, 312) umfasst, der mit einem jeweiligen Anschlussglied (711, 712) in Eingriff bringbar ist.

## Revendications

1. Condenseur refroidi par liquide (1), d'un système de refroidissement de véhicule, adapté pour effectuer une condensation d'un fluide frigorigène circulant dans le système de refroidissement par échange de chaleur avec un liquide, comprenant une bouche d'entrée de fluide frigorigène (2110) et une bouche de sortie de fluide frigorigène (2120) à travers lesquelles le fluide frigorigène entre et sort, et une bouche d'entrée de liquide (2210) et une bouche de sortie de liquide (2220) à travers lesquelles le liquide entre et sort, dans lequel le condenseur refroidi par liquide (1) comprend :
- des éléments d'extrémité supérieurs et inférieurs en forme de plaque (3, 5), dans lesquels lesdites bouches (2110, 2120, 2210, 2220) sont obtenues sur lesdits éléments d'extrémité en forme de plaque (3, 5), de préférence elles sont toutes obtenues sur l'élément supérieur en forme de plaque (3) ;
- une pluralité d'éléments intermédiaires en forme de plaque (4) disposés entre les éléments d'extrémité en forme de plaque (3, 5) ;
dans lequel les éléments intermédiaires en forme de plaque (4) sont formés de manière spéciale, délimitant, dans leur empilement mutuel, une région de fluide frigorigène (21), dans laquelle le fluide frigorigène s'écoule, comprenant des sections d'alimentation en fluide frigorigène (211, 212), des sections d'entrée et de sortie, respectivement, en communication fluidique avec la bouche d'entrée de fluide frigorigène (2110) et avec la bouche de sortie de fluide frigorigène (2120), et des sections transversales de fluide frigorigène (213), et une région de liquide (22), dans laquelle le liquide s'écoule, comprenant des sections d'alimentation en liquide (221, 222), des sections d'entrée et de sortie, respectivement, en communication fluidique avec la bouche d'entrée de liquide (2210) et la bouche de sortie de liquide (2220), et des sections transversales de liquide (223) positionnées en alternance avec les sections transversales de fluide frigorigène (213) ;
dans lequel le condenseur refroidi par liquide (1) comprend un élément tubulaire (6) s'étendant dans la section d'alimentation en fluide frigorigène de sortie (212), dans lequel la section transversale de l'élément tubulaire (6) est plus petite que la section transversale de la section d'alimentation en fluide frigorigène de sortie (212), identifiant un espace de condensation (9) ;
dans lequel le condenseur refroidi par liquide (1) est **caractérisé en ce que** l'élément tubulaire (6) comprend un collier radial (68), dans lequel ledit collier radial (68) est positionné entre un élément d'extrémité en forme de plaque (3, 5) et un élément intermédiaire en forme de plaque (4).

2. Condenseur refroidi par liquide (1) selon la revendication 1, dans lequel l'élément tubulaire (6) s'étend le long d'un axe (V-V), et le condenseur refroidi par liquide (1) peut être positionné dans une position dans laquelle l'élément tubulaire (6) et l'axe (V-V) sont parallèles à un plan de masse et dans laquelle, de préférence, l'élément tubulaire (6) est dans une position géodésique inférieure par rapport à la section d'alimentation en fluide frigorigène d'entrée (211).

3. Condenseur refroidi par liquide (1) selon l'une quelconque des revendications précédentes, dans lequel le fluide frigorigène à l'intérieur de l'élément tubulaire (6) s'écoule à l'état liquide vers la bouche de sortie de fluide frigorigène (2120), tandis que le fluide frigorigène à l'intérieur de l'espace de condensation (9) s'écoule dans la direction opposée, étant au moins partiellement à l'état gazeux.

4. Condenseur refroidi par liquide (1) selon l'une quelconque des revendications précédentes, dans lequel l'élément d'extrémité en forme de plaque (3, 5) comprend un évidement (38) dans lequel le collier radial (68) est logé.

5. Condenseur refroidi par liquide (1) selon l'une quelconque des revendications précédentes, dans lequel au moins l'un des éléments intermédiaires en forme de plaque (4) comprend une partie d'obturation (45) positionnée transversalement à une section d'alimentation en fluide frigorigène d'entrée (211) pour dévier l'écoulement du fluide frigorigène.

6. Condenseur refroidi par liquide (1) selon la revendication 5, dans lequel au moins un des éléments intermédiaires en forme de plaque (4) comprend une partie d'obturation (45') positionnée transversalement à une section d'alimentation en fluide frigorigène de sortie (212) de sorte que, dans les sections transversales de fluide frigorigène (213), une région de fluide frigorigène d'entrée (213'), une région de fluide frigorigène intermédiaire (213'') et une région de fluide frigorigène de sortie (213‴) soient identifiées.

7. Condenseur refroidi par liquide (1) selon la revendication 6, dans lequel le fluide frigorigène s'écoule dans la région de fluide frigorigène (21) de manière à avoir des flux dans des directions transversales opposées entre les régions de fonctionnement respectives (213', 213", 213‴).

8. Condenseur refroidi par liquide (1) selon l'une quelconque des revendications 6 à 7, dans lequel la partie d'obturation (45') logée dans la section d'alimentation en fluide frigorigène de sortie (212) comprend une ouverture d'élément tubulaire (456) à travers laquelle s'étend l'élément tubulaire (6), dans lequel ladite partie d'obturation (45') a une forme annulaire lorsqu'elle est logée dans l'espace de condensation (9).

9. Condenseur refroidi par liquide (1) selon l'une quelconque des revendications 6 à 8, dans lequel l'élément tubulaire (6) s'étend le long d'un axe (V-V) au-delà de la partie d'obturation (45') dans la section d'alimentation en fluide frigorigène de sortie (212) en communication fluidique avec la région de fluide frigorigène de sortie (213‴).

10. Condenseur refroidi par liquide (1) selon l'une quelconque des revendications 5 à 9, dans lequel ladite partie d'obturation (45, 45') est intégrée, d'une seule pièce, dans l'élément intermédiaire en forme de plaque (4) respectif.

11. Condenseur refroidi par liquide (1) selon l'une quelconque des revendications précédentes, dans lequel les sections transversales de fluide frigorigène (213) et/ou les sections transversales de liquide (223) comprennent des éléments turbulateurs respectifs.

12. Condenseur refroidi par liquide (1) selon l'une quelconque des revendications précédentes, dans lequel les sections transversales de fluide frigorigène (213) ont une hauteur plus grande que les sections transversales de liquide (223).

13. Condenseur refroidi par liquide (1) selon l'une quelconque des revendications précédentes, dans lequel les éléments d'extrémité en forme de plaque (3, 5), les éléments intermédiaires en forme de plaque (4) et l'élément tubulaire (6) sont reliés mutuellement par une opération de brasage, de préférence dans un four sous vide.

14. Condenseur refroidi par liquide (1) selon l'une quelconque des revendications précédentes, comprenant des éléments de raccordement de fluide frigorigène d'entrée et de sortie (711, 712), et des éléments de raccordement de liquide d'entrée et de sortie (721, 722), reliés fonctionnellement à l'élément d'extrémité en forme de plaque (3, 5) au niveau de la bouche d'entrée de fluide frigorigène (2110), de la bouche de sortie de fluide frigorigène (2120), de la bouche d'entrée de liquide (2210) et de la bouche de sortie de liquide (2220), dans lequel lesdits éléments de raccordement (711, 712, 721, 722), lesdits éléments d'extrémité en forme de plaque (3, 5), lesdits éléments intermédiaires en forme de plaque (4) et ledit élément tubulaire (6) sont mutuellement reliés par une seule opération de brasage, de préférence dans un four sous vide.

15. Condenseur refroidi par liquide (1) selon la revendication 14, dans lequel l'élément d'extrémité en forme de plaque (3, 5), de préférence l'élément d'extrémité en forme de plaque supérieur (3), comprend un collier de raccordement saillant (312), positionné autour de la bouche de sortie de fluide frigorigène (2120), avec lequel l'élément de raccordement de fluide frigorigène de sortie (712) peut venir en prise.

16. Condenseur refroidi par liquide (1) selon la revendication 14 ou la revendication 15, dans lequel l'élément d'extrémité en forme de plaque (3, 5) comprend, autour de la bouche d'entrée de fluide frigorigène et de la bouche de sortie de fluide frigorigène (2110, 2120), un collier de raccordement saillant (311, 312) respectif, avec lequel un élément de raccordement (711, 712) respectif peut venir en prise.
